# EUROPÄISCHE PATENTSCHRIFT

(11) **EP 4 147 258 B1**
(45) Veröffentlichungstag und Bekanntmachung des Hinweises auf die Patenterteilung: **15.10.2025**
(21) Anmeldenummer: 21731698.3
(22) Anmeldetag: 27.05.2021
(51) Int. Cl.: H01H 9/34, H01H 71/02, H02B 13/025

(54) **ABGASMODUL FÜR EINEN ELEKTRISCHEN SCHALTER, VORRICHTUNG AUS ZWEI SOLCHEN ABGASMODULEN UND SCHALTSCHRANK MIT SOLCH EINER VORRICHTUNG**
GAS EXHAUST MODULE FOR AN ELECTRICAL SWITCH, DEVICE CONSISTING OF TWO SUCH GAS EXHAUST MODULES AND SWITCHGEAR COMPRISING SUCH A DEVICE
MODULE D'ÉCHAPPEMENT DE GAZ POUR UN INTERRUPTEUR ÉLECTRIQUE, DISPOSITIF COMPOSÉ DE DEUX DE CES MODULES D'ÉCHAPPEMENT DE GAZ ET APPAREILLAGE DE COMMUTATION COMPRENANT UN TEL DISPOSITIF

(30) Priorität: 23.06.2020 DE 102020207775
(43) Veröffentlichungstag der Anmeldung: 15.03.2023
(73) Patentinhaber: Siemens Aktiengesellschaft, 80333 München (DE)
(72) Erfinder: MALICH, Timo, 92245 Kümmersbruck (DE); PLECHINGER, Ekkehard, 92361 Röckersbühl (DE); WEBER, Christoph, 84061 Ergoldsbach (DE)
(74) Vertreter: Siemens Patent Attorneys
(86) Internationale Anmeldenummer: PCT/EP2021/064139
(87) Internationale Veröffentlichungsnummer: WO 2021/259585

(56) Entgegenhaltungen:
- EP-A2- 2 081 202
- EP-B1- 2 641 255
- ES-T3- 2 525 035

## Beschreibung

Die Erfindung betrifft eine Vorrichtung aus zwei Abgasmodulen für elektrische Schalter und einen Schaltschrank mit solch einer Vorrichtung.

Bei der Kurzschlussabschaltung von Leistungsschaltern entstehen Schaltgase, welche Verunreinigungen mit sich führen. Beispielsweise können diese Verunreinigungen Metallperlen oder Rußpartikel sein. Diese Verunreinigungen verteilen sich im Kurzschlussfall in der gesamten Anlage. Betroffene Schaltschränke und Verteilungen müssen oft aufwendig gereinigt werden, was zu Anlagenausfallzeiten führen kann. Ebenso kann es vorkommen, dass elektrische Geräte oder Leitungen in diesen Verteilungen durch von den Schaltgasen mitgeführten Metallperlen beeinträchtigt werden, beispielsweise Kurzschlüsse entstehen. Insgesamt können diese Verunreinigungen zu Anlagenausfallzeiten führen, entweder aufgrund von notwendigen Reinigungsschritten oder aufgrund von Wartungsarbeiten zur Behebung von Kurzschlüssen.

Die Leistungsschalterbaugruppe der EP 2 641 255 B1 umfasst ein Gehäuse, einen Auslösemechanismus, einen Entlüftungskanal und eine Kammer. Der im Gehäuse positionierte Auslösemechanismus kann bewirken, dass sich ein beweglicher Kontakt von einem zweiten Kontakt trennt, wenn die Schutzschalterbaugruppe einen elektrischen Fehler erkennt. Der Entlüftungskanal ist im Gehäuse ausgebildet und so positioniert, dass Gas und Schmutz, der entsteht, wenn sich der bewegliche Kontakt während des elektrischen Fehlers vom zweiten Kontakt trennt, in eine Öffnung im Gehäuse abgeführt werden. Die Kammer verfügt über ein Kammergehäuse, das mit dem Gehäuse neben der Öffnung verbunden ist, so dass die Kammer das aus der Öffnung austretende Gas und den Schmutz aufnimmt.

Die ES 2 525 035 T3 offenbart einen Polverbinder für eine Gruppe von in Reihe geschalteten Leistungsschaltern, die auf einer Sammelschiene montiert sind, hergestellt in Form eines leitenden Aluminiumelements, das Anschlussklemmen und Kühlrippen mit einer Länge umfasst, die angeordnet sind im vorderen Teil des Steckverbinders, wobei zusätzliche Kühlrippen mit einer Länge aufweist, die ein Fragment des leitenden Elements bilden und sich im hinteren Teil des Steckverbinders und an der Außenseite befinden.

Das Schaltgerät der EP 2 081 202 A2 weist zumindest zwei Schaltkontakte zur Unterbrechung einer Strombahn auf, wobei die Schaltkontakte in einer Löschkammer zum Löschen eines beim Öffnen entstehenden Lichtbogens (LB) angeordnet sind. Die Löschkammer mündet in einen Gasaustrittskanal zum Entweichen eines beim Ziehen des Lichtbogens (LB) erzeugten Überdrucks (P1). Zur Druckerfassung ist im Gasaustrittskanal ein Drucksensor vorhanden, welcher bei Erreichen eines vorgebbaren Druckwertes ein zumindest mittelbar damit verbundenes Schaltschloss des Schaltgerätes auslöst.

Es ist Aufgabe der vorliegenden Erfindung, ein Abgasmodul für die Montage an einem elektrischen Schalter zur Verfügung zu stellen, welches in einem Schaltfeld mit verschiedenen elektrischen Schaltern einfach montierbar ist und einfach ein modulares Abgassystem zur Verfügung stellt.

Die erfindungsgemäße Aufgabe wird durch die Vorrichtung gemäß Patenanspruch 1 gelöst. Vorteilhafte Ausgestaltungen der erfindungsgemäßen Vorrichtung sind in den Unteransprüchen 2 bis 6 angegeben. Die erfindungsgemäße Aufgabe wird ebenso durch den Schaltschrank gemäß Patentanspruch 7 gelöst. Eine vorteilhafte Ausgestaltung des erfindungsgemäßen Schaltschranks ist in Patentanspruch 8 angegeben.

Das Abgasmodul für einen elektrischen Schalter ist so ausgestaltet, dass der elektrische Schalter Auslässe von Schaltgasen an seiner Abgangsseite und/oder an seiner Eingangsseite aufweist, wobei das Abgasmodul am elektrischen Schalter montierbar ist, so dass die Schaltgase in einen Abgaskanal des Abgasmoduls gelenkt werden, wobei der Abgaskanal die Schaltgase im Wesentlichen rechtwinklig ablenkt und der Abgaskanal modular mit einem benachbarten Abgaskanal eines benachbarten Abgasmoduls zusammenwirken kann um die abgelenkten Schaltgase zusammenzuführen.

Vorteilhaft hierbei ist, dass nach einem Kurzschluss die Ruß- und Kontaktabbrand-Partikel definiert aus dem Schalter geführt werden und dadurch beispielsweise ein Schaltschrank oder eine Verteilung nicht verschmutzt werden und deshalb auch eine Reinigung vermieden wird.

In einer Ausgestaltung des Abgasmoduls ist ein Abgaskanal an der Abgangsseite und/oder an der Eingangsseite des elektrischen Schalters angeordnet.

In einer weiteren Ausgestaltung des Abgasmoduls umfasst der Abgaskanal Rippen, welche die Schaltgase polweise voneinander isolieren.

In einer Ausgestaltung des Abgasmoduls sind Barrieren am Abgaskanal angeordnet, welche elektrische Leitungen gegeneinander isolieren können im Falle des am elektrischen Schalter montierten Abgasmoduls.

Die Vorrichtung gemäß Patentanspruch 1 umfasst ein erstes Abgasmodul und ein zweites Abgasmodul, wobei das erste Abgasmodul benachbart zum zweiten Abgasmodul montiert ist, so dass die jeweiligen Abgaskanäle modular ineinander fassen und dadurch die abgelenkten Schaltgase zusammengeführt werden.

In einer Ausgestaltung der erfindungsgemäßen Vorrichtung ist ein erster elektrischer Schalter am ersten Abgasmodul und ein zweiter elektrischer Schalter am zweiten Abgasmodul montiert. In einer weiteren Ausgestaltung der erfindungsgemäßen Vorrichtung ist der erste elektrische Schalter und/oder der zweite elektrische Schalter ein Leistungsschalter.

Der Schaltschrank gemäß Patentanspruch 7 weist eine erfindungsgemäße Vorrichtung auf, wobei die Vorrichtung an einer Wand des Schaltschranks befestigt ist und die zusammengeführten Schaltgase aus dem Schaltschrank herausgeführt werden.

In einer Ausgestaltung des erfindungsgemäßen Schaltschranks werden die zusammengeführten Schaltgase aus dem Schaltschrank über einen flexiblen Kanal herausgeführt.

Die oben beschriebenen Eigenschaften, Merkmale und Vorteile dieser Erfindung sowie die Art und Weise, wie sie erreicht werden, werden klarer und deutlicher verständlich im Zusammenhang mit der folgenden Beschreibung der Ausführungsbeispiele, die im Zusammenhang mit den Figuren näher erläutert werden.

Dabei zeigen:
- Figur 1:: Abgasmodul montiert an einem elektrischen Schalter (nicht im Rahmen der Ansprüche);
- Figur 2:: Querschnitt durch das Abgasmodul (nicht im Rahmen der Ansprüche);
- Figur 3A und 3B:: Abgasmodul mit montiertem elektrischem Schalter an einer Wand eines Schaltschranks (nicht im Rahmen der Ansprüche);
- Figur 4A und 4B:: erfindungsgemäße Vorrichtung mit Abgaskanäle und Rippen sowie Barrieren;
- Figur 5:: erfindungsgemäße Vorrichtung aus erstem Abgasmodul und zweitem Abgasmodul;
- Figur 6A und 6B:: erfindungsgemäße Vorrichtung aus erstem Abgasmodul und zweitem Abgasmodul sowie Kanalabdeckung am Abgasmodul;
- Figur 7:: erfindungsgemäße Vorrichtung mit erstem Abgasmodul und zweitem Abgasmodul sowie erstem elektrischem Schalter und zweitem elektrischen Schalter; und
- Figur 8:: erfindungsgemäße Vorrichtung mit erstem Abgasmodul und zweitem Abgasmodul sowie erstem elektrischen Schalter und zweitem elektrischen Schalter.

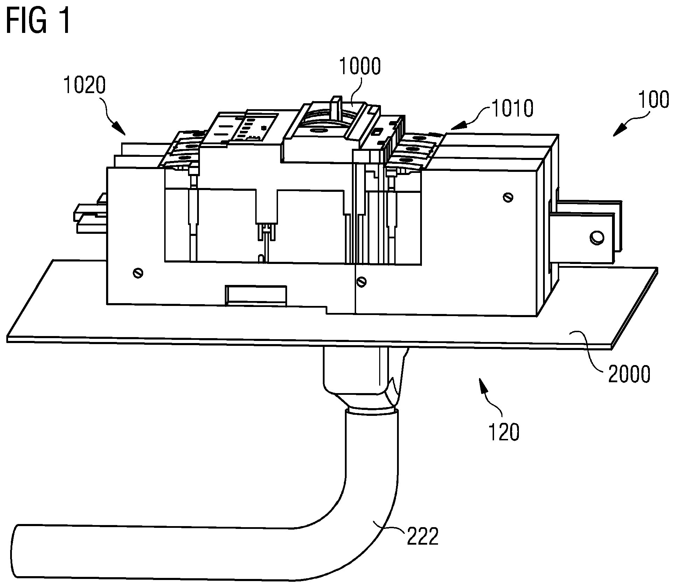

In Figur 1 ist ein Abgasmodul 100 für einen elektrischen Schalter 1000 dargestellt. Der elektrische Schalter 1000 weist Auslässe von Schaltgasen an seiner Abgangsseite 1010 und/oder an seiner Eingangsseite 1020 auf. In der Darstellung der Figur 1 ist das Abgasmodul 100 an einem elektrischen Schalter 1000 montiert, so dass die Schaltgase in einen Abgaskanal 150 des Abgasmoduls 100 gelenkt werden.

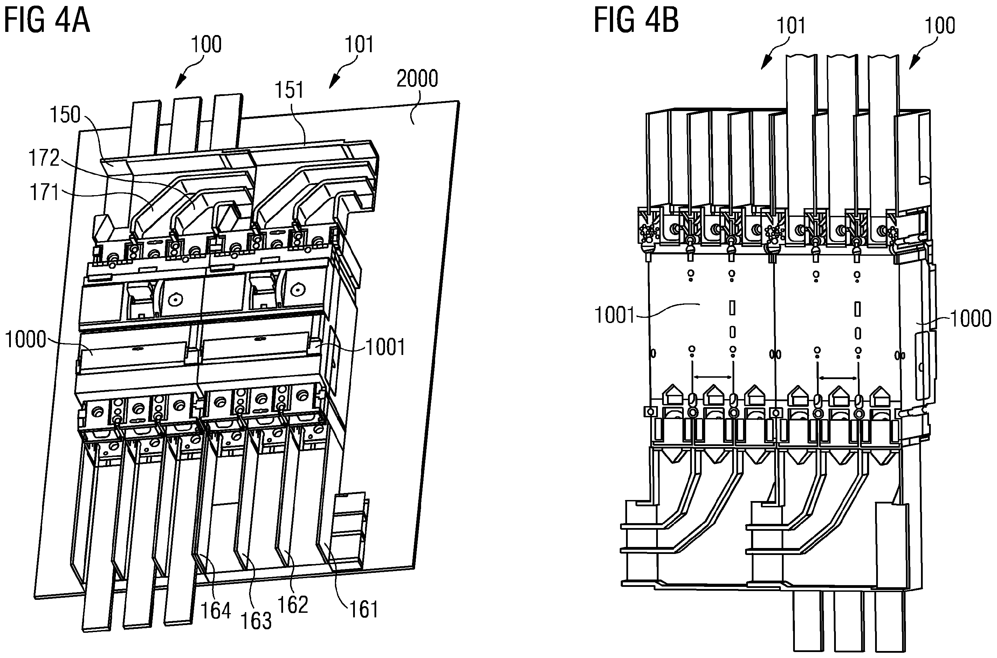

Der Abgaskanal 150 lenkt die Schaltgase im Wesentlichen rechtwinklig ab und kann modular mit einem benachbarten Abgaskanal 150 eines benachbarten Abgasmoduls 101 zusammenwirken, um die abgelenkten Schaltgase zusammenzuführen. Dies wird näher anhand der Figuren 4A und 4B, 5, 6A und 6B, 7 und 8 erläutert werden.

Das Abgasmodul 100 ist an einer Wand 200C eines Schaltschranks befestigt. Die zusammengeführten Schaltgase können über einen flexiblen Kanal 222 aus dem Schaltschrank herausgeführt werden.

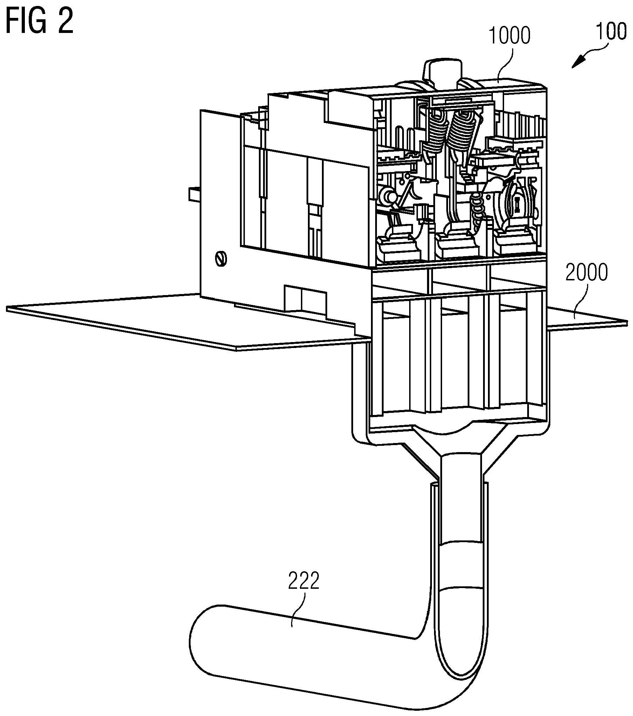

In Figur 2 ist das Abgasmodul 100 montiert am elektrischen Schalter 1000 in einer Schnittdarstellung gezeigt. Ebenso ist die Wand 2000 des Schaltschranks und der flexible Kanal 222, der die zusammengeführten Schaltgase aus dem Schaltschrank herausführt, dargestellt.

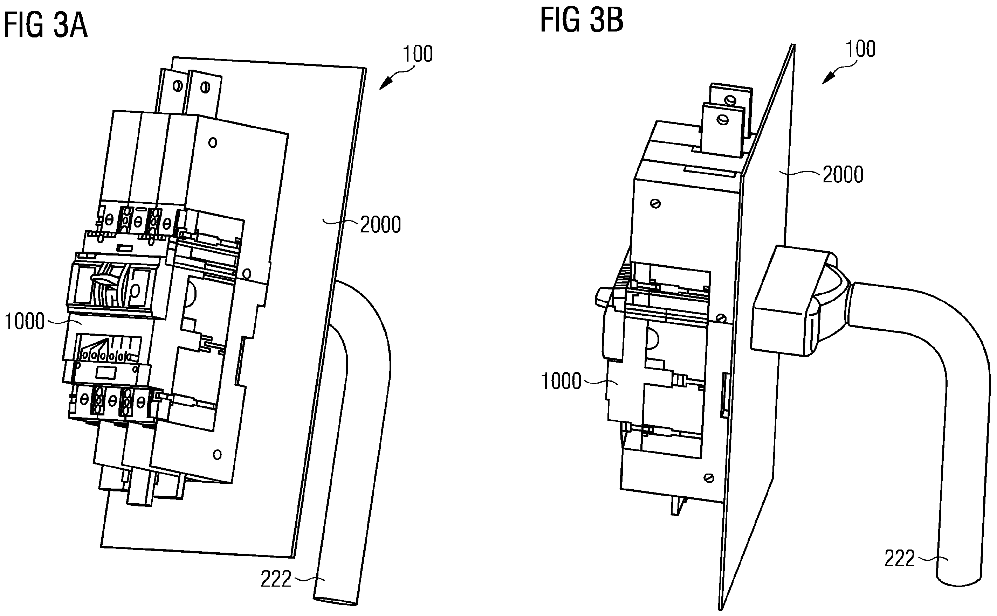

Die Figuren 3A und 3B zeigen das Abgasmodul 100 montiert an der Wand 2000 des Schaltschranks und mit flexiblen Kanal 222 von verschiedenen Seiten.

Bei dem Abgasmodul 100 ist ein Abgaskanal 150 an der Abgangsseite 1010 oder an der Eingangsseite 1020 des elektrischen Schalters 1000 angeordnet, ebenso ist es möglich, dass das Abgasmodul 100 einen Abgaskanal 150 an der Abgangsseite 1010 und an der Eingangsseite 1020 des elektrischen Schalters umfasst.

In den Figuren 4A und 4B ist eine erfindungsgemäße Vorrichtung aus zwei Abgasmodulen 100, 101 dargestellt. Der Abgaskanal 150 lenkt dabei die Schaltgase im Wesentlichen rechtwinklig ab und der Abgaskanal 150 wirkt modular mit einem benachbarten Abgaskanal 151 eines benachbarten Abgasmoduls 101 zusammen, um die abgelenkten Schaltgase zusammenzuführen.

Der Abgaskanal 150 umfasst Rippen 171, 172, welche die Schaltgase polweise voneinander isolieren. Ebenso können Barrieren 161, 162, 163, 164 am Abgaskanal 150 angeordnet sein, welche elektrische Leitungen 191, 192, 193 gegeneinander isolieren können im Falle des am elektrischen Schalter 1000 montierten Abgasmoduls 100.

Entsprechend der Darstellung der Figuren 4A und 4B können die Barrieren 161, 162, 163, 164 direkt über beziehungsweise unter dem Abgaskanal 150 in einer Ebene angeordnet sein.

Die erfindungsgemäße Vorrichtung umfasst somit ein erstes Abgasmodul 100 und ein zweites Abgasmodul 101, wobei das erste Abgasmodul 100 benachbart zum zweiten Abgasmodul 101 montiert ist, so dass die jeweiligen Abgaskanäle 150, 151 modular ineinander fassen und dadurch die abgelenkten Schaltgase zusammengeführt werden. Entsprechend der Darstellung der Figuren 4A und 4B ist am ersten Abgasmodul 100 ein elektrischer Schalter 1000 und am zweiten Abgasmodul 101 ein zweiter elektrischer Schalter 1001 montiert.

Der erste elektrische Schalter 1000 kann ein Leistungsschalter sein, ebenso kann der zweite elektrische Schalter 1001 ebenfalls ein Leistungsschalter sein.

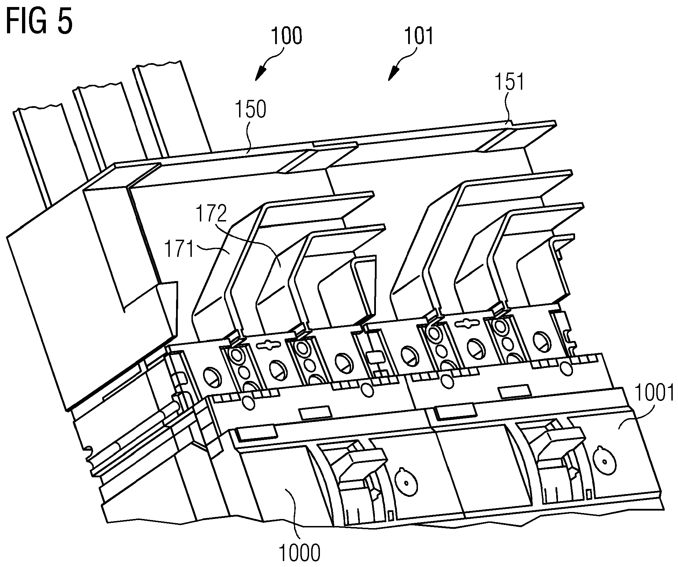

Figur 5 zeigt detaillierter die erfindungsgemäße Vorrichtung aus erstem Abgasmodul 100 und zweitem Abgasmodul 101. Die jeweiligen Abgaskanäle 150, 151 fassen modular ineinander, wodurch die abgelenkten Schaltgase zusammengeführt werden.

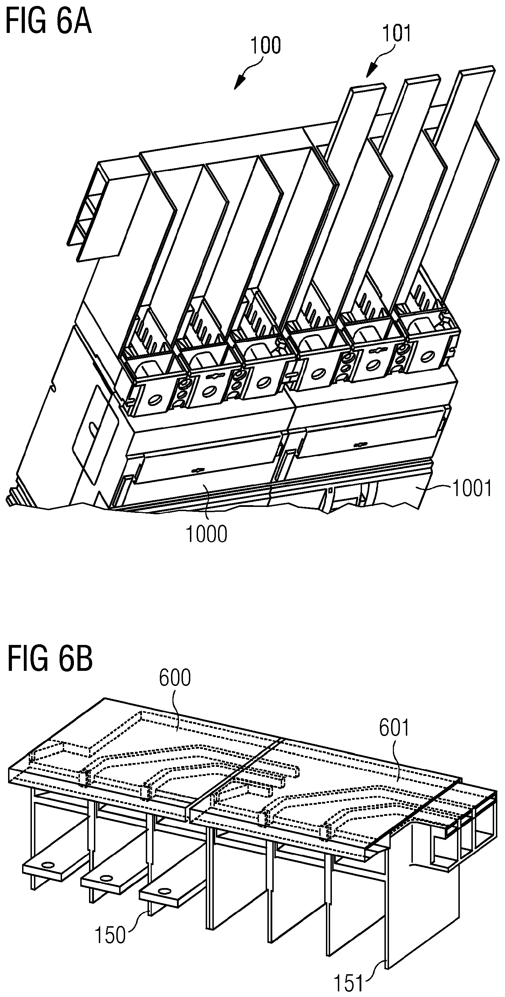

In Figur 6A ist ebenfalls die erfindungsgemäße Vorrichtung aus erstem Abgasmodul 100 und zweitem Abgasmodul 101 dargestellt und an diesen montiert der erste elektrische Schalter 1000 und der zweite elektrische Schalter 1001. In Figur 6B sind das erste Abgasmodul 100 mit erstem Abgaskanal 150 und das zweite Abgasmodul 101 mit zweitem Abgaskanal 151 dargestellt. Des Weiteren sind Abdeckungen 600, 601 dargestellt, die die jeweiligen Abgaskanäle 150, 151 verschließen und damit sicherstellen, dass die Abgasmodule 100, 101 dem Abschaltdruck der elektrischen Schalter 1000, 1001 standhalten und durch Undichtigkeiten der Abgaskanäle 150, 151 so wenig Gas wie möglich nach außer oder zum Nachbarpol gelangt.

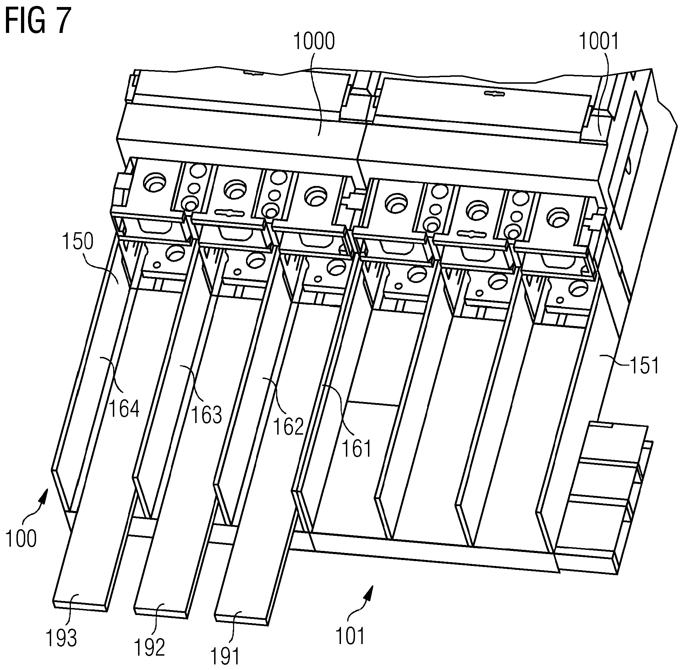

Figur 7 zeigt die erfindungsgemäße Vorrichtung aus erstem Abgasmodul 100 und zweitem Abgasmodul 101. Dabei sind Barrieren 161, 162, 163, 164 am Abgaskanal 150 angeordnet, die elektrische Leitungen 191, 192, 193 wie Stromschienen gegeneinander isolieren bei montiertem elektrischem Schalter 1000.

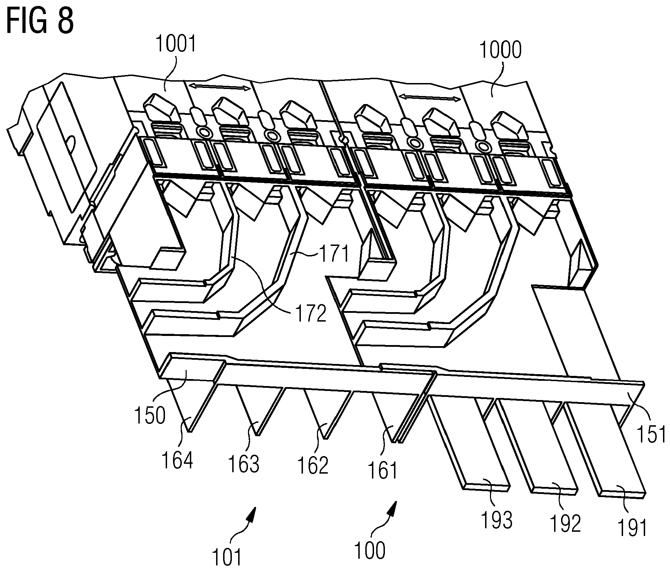

Figur 8 zeigt die Unterseite der Darstellung der erfindungsgemäßen Vorrichtung von Figur 7. Die jeweiligen Abgaskanäle 150, 151 des ersten Abgasmoduls 100 beziehungsweise des zweiten Abgasmoduls 101 fassen modular ineinander, wodurch die abgelenkten Schaltgase zusammengeführt werden.

Die modularen Abgasmodule 100, 101 mit Abgaskanälen 150, 151 sind so geformt, dass deren Abgase oder Schaltgase in den Nachbarkanal strömen können und somit von einem Abgasmodul ins nächste Abgasmodul geleitet werden, bis diese am Ende an beliebiger Stelle aus einem Schaltschrank herausgeleitet werden. Dadurch wird sichergestellt, dass nach einem Kurzschluss des elektrischen Schalters die entstehenden Ruß- und Kontaktabbrand-Partikel definiert aus einem Schaltschrank geführt werden und dadurch der Schaltschrank nicht verschmutzt wird und deshalb auch nicht gereinigt werden muss.

## Patentansprüche

1. Vorrichtung aus einem ersten Abgasmodul (100) und einem zweiten Abgasmodul (101), wobei das erste Abgasmodul (100) benachbart zum zweiten Abgasmodul (101) montiert ist, so dass jeweiligen Abgaskanäle (150, 151) modular ineinander fassen und dadurch die abgelenkten Schaltgase zusammengeführt werden,
wobei die Abgasmodule (100, 101) jeweils für einen elektrischen Schalter (1000, 1001) vorgesehen sind, wobei der elektrische Schalter (1000, 1001) Auslässe von Schaltgasen an seiner Abgangsseite (1010) und/oder an seiner Eingangsseite (1020) aufweist, wobei jedes Abgasmodul (100, 101) am jeweiligen elektrischen Schalter (1000, 1001) montierbar ist, so dass die Schaltgase in einen Abgaskanal (150) des Abgasmoduls (100, 101) gelenkt werden,
wobei der Abgaskanal (150) des ersten Abgasmoduls (100) die Schaltgase im Wesentlichen rechtwinklig ablenkt und der Abgaskanal (150) modular mit dem benachbarten Abgaskanal (151) des benachbarten Abgasmoduls (101) zusammenwirkt um die abgelenkten Schaltgase zusammenzuführen.

2. Vorrichtung gemäß Anspruch 1, bei dem ein Abgaskanal (150) an der Abgangsseite (1010) und/oder an der Eingangsseite (1020) des elektrischen Schalters (1000, 1001) anordnenbar ist.

3. Vorrichtung gemäß Anspruch 1 oder 2, bei dem der Abgaskanal (150) Rippen (171, 172) umfasst, welche die Schaltgase polweise voneinander isolieren können.

4. Vorrichtung gemäß einem der vorherigen Ansprüche, bei dem am Abgaskanal (150) Barrieren (161, 162, 163, 164) angeordnet sind, welche elektrische Leitungen (191, 192, 193) gegeneinander isolieren können im Falle des am elektrischen Schalter (1000, 1001) montierten Abgasmoduls (100, 101).

5. Vorrichtung gemäß Anspruch 1, wobei am ersten Abgasmodul (100) ein erster elektrischer Schalter (1000) montiert ist und wobei am zweiten Abgasmodul (101) ein zweiter elektrischer Schalter (1001) montiert ist.

6. Vorrichtung gemäß Anspruch 5, wobei der erste elektrische Schalter (1000) und/oder der zweite elektrische Schalter (1001) ein Leistungsschalter ist.

7. Schaltschrank mit einer Vorrichtung gemäß einem der Ansprüche 1 bis 6, wobei die Vorrichtung an einer Wand (2000) des Schaltschranks befestigt ist und die zusammengeführten Schaltgase aus dem Schaltschrank herausgeführt werden.

8. Schaltschrank gemäß Anspruch 7, bei dem die zusammengeführten Schaltgase aus dem Schaltschrank über einen flexiblen Kanal (222) herausgeführt werden.

## Claims

1. Device formed by a first exhaust gas module (100) and a second exhaust gas module (101), wherein the first exhaust gas module (100) is mounted adjacent to the second exhaust gas module (101) such that respective exhaust gas channels (150, 151) grip one inside the other in modular fashion and the deflected switching gases are thereby brought together,
wherein the exhaust gas modules (100, 101) are each provided for an electrical switch (1000, 1001), wherein the electrical switch (1000, 1001) has outlets for switching gases on its output side (1010) and/or on its input side (1020), wherein each exhaust gas module (100, 101) can be mounted on the respective electrical switch (1000, 1001) such that the switching gases are directed into an exhaust gas channel (150) of the exhaust gas module (100, 101),
wherein the exhaust gas channel (150) of the first exhaust gas module (100) deflects the switching gases substantially at a right angle, and the exhaust gas channel (150) interacts in a modular manner with the neighbouring exhaust gas channel (151) of the neighbouring exhaust gas module (101) in order to bring together the deflected switching gases.

2. Device according to Claim 1, in which an exhaust gas channel (150) can be arranged on the output side (1010) and/or on the input side (1020) of the electrical switch (1000, 1001).

3. Device according to Claim 1 or 2, in which the exhaust gas channel (150) comprises ribs (171, 172) which can isolate the switching gases from one another pole by pole.

4. Device according to one of the preceding claims, in which barriers (161, 162, 163, 164) are arranged at the exhaust gas channel (150), said barriers being able to isolate electrical lines (191, 192, 193) from one another in the event of the exhaust gas module (100, 101) being mounted on the electrical switch (1000, 1001).

5. Device according to Claim 1, wherein a first electrical switch (1000) is mounted on the first exhaust gas module (100), and wherein a second electrical switch (1001) is mounted on the second exhaust gas module (101).

6. Device according to Claim 5, wherein the first electrical switch (1000) and/or the second electrical switch (1001) is a circuit breaker.

7. Switch cabinet comprising a device according to one of Claims 1 to 6, wherein the device is fastened to a wall (2000) of the switch cabinet, and the switching gases which have been brought together are guided out of the switch cabinet.

8. Switch cabinet according to Claim 7, in which the switching gases which have been brought together are guided out of the switch cabinet via a flexible channel (222).

## Revendications

1. Dispositif constitué d'un premier module de gaz d'échappement (100) et d'un deuxième module de gaz d'échappement (101), dans lequel le premier module de gaz d'échappement (100) est monté de manière adjacente au deuxième module de gaz d'échappement (101), de sorte que des canaux de gaz d'échappement (150, 151) respectifs s'emboîtent les uns dans les autres de manière modulaire et que les gaz de commutation déviés sont ainsi rassemblés,
dans lequel les modules de gaz d'échappement (100, 101) sont prévus respectivement pour un commutateur électrique (1000, 1001), dans lequel le commutateur électrique (1000, 1001) présente des sorties de gaz de commutation au niveau de son côté de sortie (1010) et/ou au niveau de son côté d'entrée (1020), dans lequel chaque module de gaz d'échappement (100, 101) peut être monté sur le commutateur électrique (1000, 1001) respectif de sorte que les gaz de commutation sont dirigés dans un canal de gaz d'échappement (150) du module de gaz d'échappement (100, 101), dans lequel le canal de gaz d'échappement (150) du premier module de gaz d'échappement (100) dévie les gaz de commutation de manière essentiellement perpendiculaire et le canal de gaz d'échappement (150) coopère de manière modulaire avec le canal de gaz d'échappement (151) adjacent du module de gaz d'échappement (101) adjacent afin de rassembler les gaz de commutation déviés.

2. Dispositif selon la revendication 1, dans lequel un canal de gaz d'échappement (150) peut être agencé au niveau du côté de sortie (1010) et/ou au niveau du côté d'entrée (1020) du commutateur électrique (1000, 1001).

3. Dispositif selon la revendication 1 ou 2, dans lequel le canal de gaz d'échappement (150) comprend des ailettes (171, 172) qui peuvent isoler les gaz de commutation les uns des autres pôle par pôle.

4. Dispositif selon l'une quelconque des revendications précédentes, dans lequel des barrières (161, 162, 163, 164) sont agencées au niveau du canal de gaz d'échappement (150), lesquelles peuvent isoler des conduites électriques (191, 192, 193) les unes des autres dans le cas où le module de gaz d'échappement (100, 101) est monté sur le commutateur électrique (1000, 1001).

5. Dispositif selon la revendication 1, dans lequel un premier commutateur électrique (1000) est monté sur le premier module de gaz d'échappement (100) et un deuxième commutateur électrique (1001) est monté sur le deuxième module de gaz d'échappement (101).

6. Dispositif selon la revendication 5, dans lequel le premier commutateur électrique (1000) et/ou le deuxième commutateur électrique (1001) est/sont un/des disjoncteur(s).

7. Armoire de commande comprenant un dispositif selon l'une quelconque des revendications 1 à 6, dans laquelle le dispositif est fixé à une paroi (2000) de l'armoire de commande et les gaz de commutation rassemblés sont guidés hors de l'armoire de commande.

8. Armoire de commande selon la revendication 7, dans laquelle les gaz de commutation rassemblés sont guidés hors de l'armoire de commande par l'intermédiaire d'un canal flexible (222).
